# EUROPEAN PATENT APPLICATION

(11) **EP 4 401 415 A1**
(43) Date of publication of application: **17.07.2024**
(21) Application number: 23151814.3
(22) Date of filing: 16.01.2023
(51) Int. Cl.: H04N 23/698, H04N 23/80, H04N 23/90

(54) **METHOD FOR GENERATING AN OVERALL DIGITAL IMAGE**

(71) Applicant: Mission Embedded GmbH, 1100 Wien (AT)
(72) Inventor: SARWAR, Omair, 1020 Wien (AT); REISNER, Clemens, 1050 Wien (AT); KREILMEIER, Michael, 1050 Wien (AT)
(74) Representative: Wildhack & Jellinek Patentanwälte

(57) **Abstract**

Method for generating an overall digital image (I) and/or representation of a scene
a) using a plurality of cameras (C₁, C₂, C₃)
b) wherein for each of the cameras (C₁, C₂, C₃) a separate bird-eye-view-transformation (BEV₁, BEV₂, BEV₃) is determined, which transforms a camera image (I₁, I₂, I₃) to a bird-eye-view-image (I₁, Î₂, Î₃), and wherein a stitching transformation (M; M1, M2, M3) is determined, so that objects (O₁) or structures that are visible in overlapping fields of view are projected to the same position in the overall image (Î) of the scene,
and
c) generating images (I₁, I₂, I₃) with the cameras (C₁, C₂, C₃), transforming said images (I₁, I₂, I₃) using the bird-eye-view-transformation (BEV₁, BEV₂, BEV₃) associated to the respective camera (C₁, C₂, C₃)
and composing the overall digital image (Î) from said transformed images (I₁, Î₂, Î₃) by application of the stitching transformation (Mi) .

## Description

The invention relates to a method and an arrangement for generating overall digital images of a scene detected by a plurality of cameras.

For the purposes of the invention the term image shall be considered as each representation of a scene, in particular a two-dimensional digital image having pixels with one or more intensity values for one or more wavelengths.

A bird-eye-view image shall show a scene from above. A bird-eye-view image is defined with respect to a real or virtual ground plane that approximates the surface of the ground.

It is the aim of the invention to present an approach to generate an overall image of a scene in a specified direction from the observation place. Such overall images can, for instance, be used to detect or recognize objects of interests, e.g. lanes or rail-tracks. The proposed approach uses a multi-camera system aiming or looking in a specified direction. Cameras have different lens systems, for instance either different focal lengths or field of views. The field of views of the single cameras overlap. Therefore, each camera is only responsible for a small range patch inside the total desired range.

The aim of the invention is achieved by the method as described in claim 1. According to the invention, a method for generating an overall digital image and/or representation of a scene is described
a) using a plurality of cameras which are located at known and/or predefined relative positions and have known and/or predefined relative orientation, in particular the cameras being oriented towards the same direction, wherein the cameras have a predetermined, in particular different, or adjusted focal length and are sensitive for different distance ranges, wherein the field of view of each camera overlaps with the field of view of at least one of the other cameras,
b) wherein for each of the cameras a separate bird-eye-view-transformation is determined, which transforms a camera image to a bird-eye-view-image with respect to a predefined ground surface or plane, said ground surface or plane being common to all cameras and their respective bird-eye-transformations, and wherein a stitching transformation Mi, i∈{1,2,3,...N}, is determined, said stitching transformation mapping regions of the bird-eye-view-images to the overall image in a manner, so that objects or structures that are visible in overlapping fields of view are projected to the same position in the overall image of the scene, and
c) in particular simultaneously, generating images with the cameras, transforming said images using the bird-eye-view-transformation associated to the respective camera and composing the overall digital image from said transformed images.

The above mentioned invention advantageously achieves sufficiently smooth overall images without significant discontinuities which allow improved results with known object detection algorithms.

In order to reduce the computational effort while still providing high-quality overall images, it can advantageously be provided that in step b) bird-eye-view-transformations and the stitching transformation are determined with respect to a predetermined camera configuration, and that step c) is repeated multiple times, the cameras in particular having the same known relative position and orientation to one another and the ground plane, using the same bird-eye-view transformations as defined in step b). This can be used as long as the camera setup remains unchanged.

In order to detect objects within the images, it can be provided that the method further comprises detecting one or more objects within the overall image and localizing said objects at one or more image positions with respect to the overall image.

In order to show detection results in the original camera images, it can be provided that the position with respect to a camera image is determined from the image position with respect to the overall image by applying the inverse of the stitching transformation and the inverse bird-eye-view-transformation to said position.

In order to use the invention to detect structures in the path of a vehicle, it can be provided that the cameras are mounted on a vehicle, in particular on a train or truck, and the virtual ground surface or plane is defined by a plane located on the ground underneath said vehicle.

In order to obtain overall images of higher accuracy that allow object detection, it can be provided that the bird-eye-transformation is calculated individually, and in particular in real time, depending on the actual position of the cameras or the vehicle on which the cameras are mounted relative to the real ground, said actual position being measured, wherein the measurement is synchronized with the acquisition of the camera images.

The aim of the invention is also achieved by the arrangement as described in claim 7. According to the invention, an arrangement for generating an overall digital image of a scene is described, comprising
a) a plurality of cameras which are located at known and/or predefined relative positions and have known and/or predefined relative orientation, in particular the cameras being oriented towards the same direction, wherein the cameras have a predetermined or adjusted focal length and are sensitive for different distance ranges, wherein the field of view of each camera overlaps with the field of view of at least one of the other cameras,
b) an image processing unit for generating an overall image having an adapter to receive images generated by the cameras, and being adapted and/or configured to - separately for each camera carry out a bird-eye-view-transformation to the respective image of the respective cameras, said bird-eye-view-transformation transforming a camera image to a bird-eye-view-image with respect to a predefined ground surface or plane, said ground surface or plane being common to all cameras and their respective bird-eye-transformations, and being adapted and/or configured to apply a stitching transformation, said stitching transformation mapping regions of an the bird-eye-view-images to the overall image in a manner, so that objects or structures that are visible in overlapping fields of view are projected to the same position in the overall image of the scene, and
c) the image processing unit being adapted and/or configured to carry out the following steps, in particular simultaneously, triggering the cameras to generate images, transforming said images using the bird-eye-view-transformation associated to the respective camera, and merging said transformed bird-eye-view images to the overall digital image by application of the stitching transformation.

The invention advantageously achieves sufficiently smooth overall images without significant discontinuities which allow improved results with known object detection algorithms.

In order to reduce the computational effort while still providing high-quality overall images, it can advantageously be provided that the image processing unit being adapted and/or configured to repeatedly generating overall digital images using the same bird-eye-view transformations.

In order to detect objects within the detected images, it can be advantageously provided that the arrangement further comprises an object detection unit for detecting an object within the overall image and localizing said object at one or more image positions with respect to the overall image.

In order to show detection results in the original camera images, it can be provided that the object detection unit is configured to determine the position with respect to a camera image from the image position with respect to the overall image by applying the inverse of the stitching transformation M and the respective bird-eye-view-transformations to said position.

In order to use the invention to detect structures in the path of a vehicle, it can be provided that the cameras are mounted on a vehicle, in particular on a truck, and the virtual ground surface or plane is defined by a plane located on the ground underneath said vehicle.

In order to obtain overall images of higher accuracy that allow object detection, it can be provided that the arrangement comprises means to determine the actual position of the cameras or the vehicle on which the cameras are mounted relative to the real ground, said measurement being synchronized with the acquisition of the camera images, and that the image processing unit is configured to calculate the bird-eye-transformation individually, and in particular in real time, depending on the actual position of the cameras or the vehicle on which the cameras are mounted relative to the real ground.

### Image Acquisition Hardware:

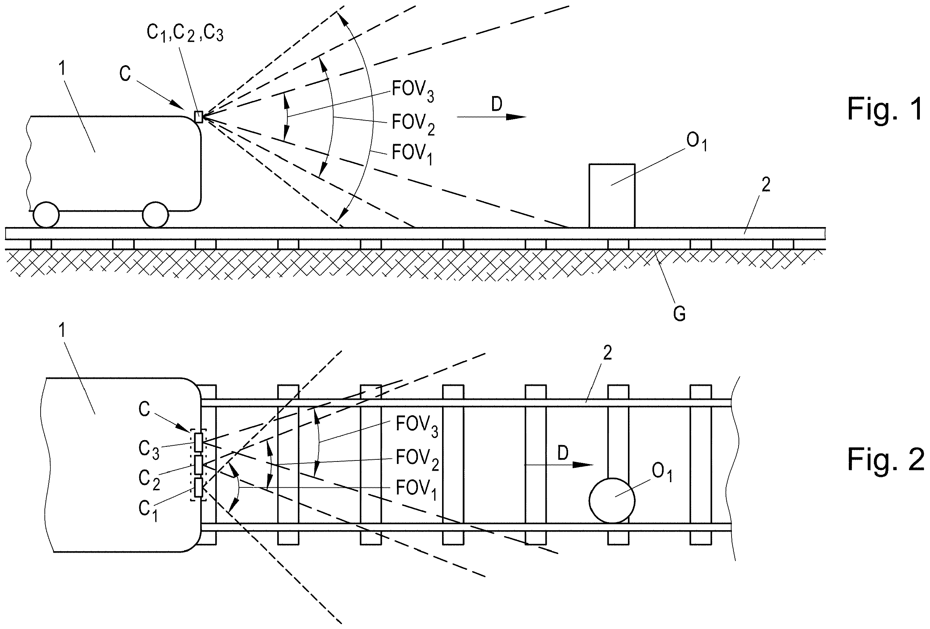

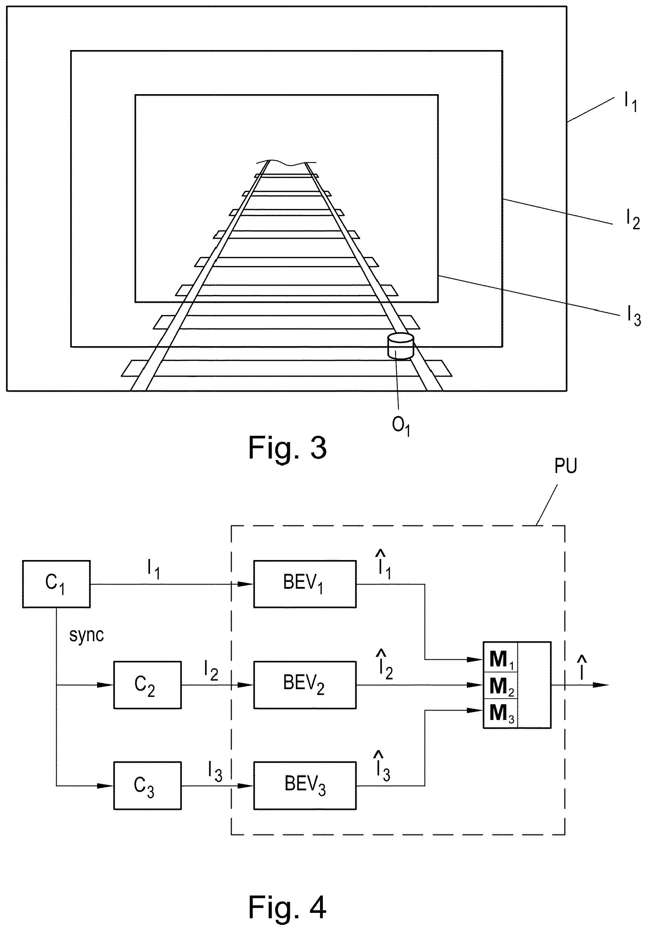

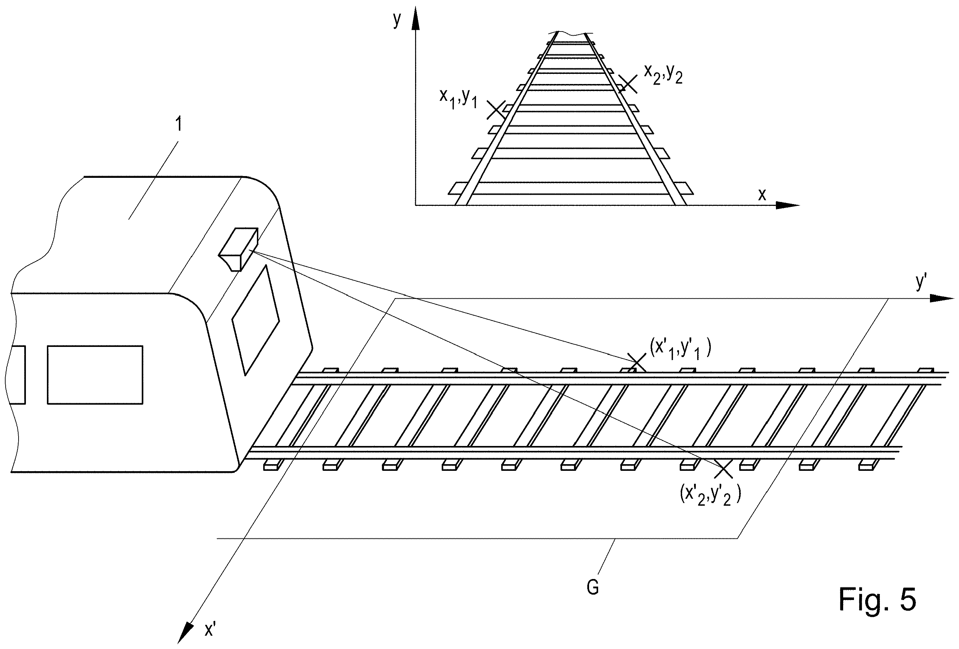

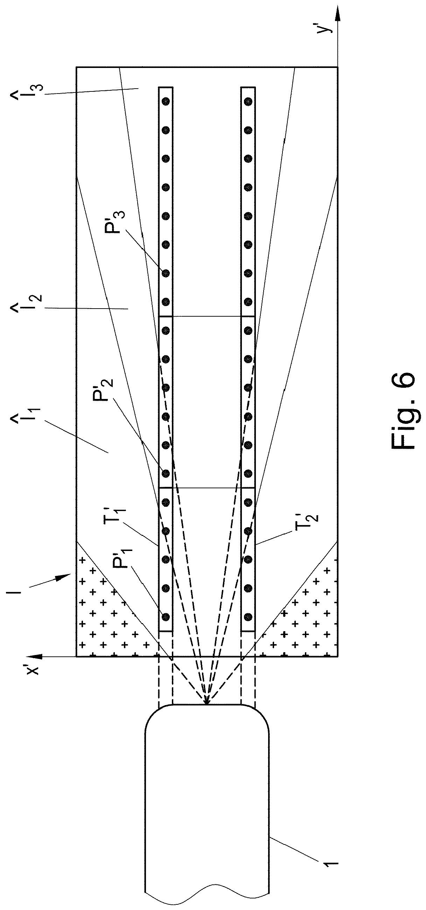

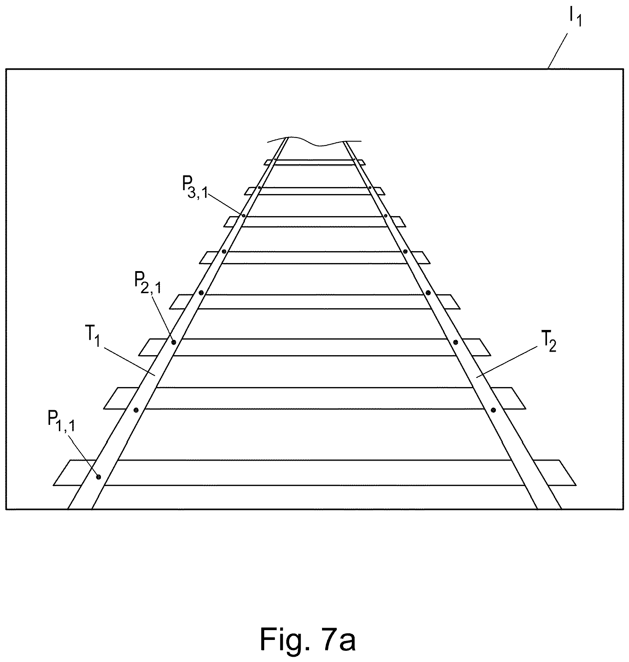

**Figures 1 and 2** schematically show a vehicle with three cameras and their respective fields of view. **Figures 3** schematically shows the digital images provided by these cameras in an overlay view. **Figure 4** depicts a schematic diagram of a preferred example of an arrangement for generating an overall image. **Figure 5** depicts a schematic example of transformation from camera coordinates to coordinates relative to the ground plane. **Figure 6** depicts a schematic example of an overall image and the results of a rail detection. **Figure 7a-7c** show the resulting rail paths as detected in **figure 6** projected back onto one of the original camera images.

One preferred, albeit not restricting, embodiment of the invention is presented with regard to the figures. In this very example the invention is used to obtain an overall image which is composed of three images that are taken simultaneously by three cameras C₁, C₂, C₃ mounted on the same vehicle, in particular a train 1, as shown in **figures 1 and 2****.** The overall image is used in order to obtain an overview of the rail tracks 2 that lie in front of said train, in particular to obtain obstacles O₁ that lie on the rail tracks 2.

All said cameras C₁, C₂, C₃ are placed rigidly or are affixed at the front portion of the train 1, i.e. the cameras C₁, C₂, C₃ are fixed at known relative positions so that the cameras C₁, C₂, C₃ cannot be moved or rotated relative to each other. The cameras C₁, C₂, C₃ are oriented towards the same direction D relative to the train 1 and are at a known position and orientation with respect to the train 1. In this example the cameras C₁, C₂, C₃ are oriented towards the direction of travel D of the train 1.

For the purposes of the invention it is not necessary to rigidly mount the cameras at the vehicle. It is sufficient to know the relative position and orientation of the cameras with respect to one another. Such position and orientation can either be acquired by manually affixing the cameras at fixed positions and orientations at the vehicle. However, it is also possible to use a more flexible approach, wherein the position and/or orientation of the cameras can be controlled, e.g. via motors. It is also possible that the position and orientation of the cameras is changed manually, wherein position and orientation are acquired electronically, e.g. via position and orientation sensors.

In order to improve the ability of the camera system C to detect obstacles O₁ or structures which are located at different distances, each of the cameras C₁, C₂, C₃ has a different focal length. Accordingly, each of the cameras C₁, C₂, C₃ is particularly sensitive for objects within a different distance range. Such a camera arrangement C is particularly favorable, because obstacles O₁ or structures which are visible in the field of view of the cameras C₁, C₂, C₃ are available in different resolutions. Structures or obstacles O₁ having a larger distance from the camera C₁, C₂, C₃ can be shown or captured at a higher resolution if they are in the field of view of a camera C₃ with a higher focal length.

The cameras are oriented towards the same direction D, so that the field of view FOV₁, FOV₂, FOV₃ of each camera C₁, C₂, C₃ overlaps with at least one field of view FOV₁, FOV₂, FOV₃ of the other cameras C₁, C₂, C₃. With the camera arrangement C as described above, it is possible to obtain one overall image I which is composed of the single camera images I₁, I₂, I₃ **(****figures 3 and 4****).**

### Obtaining Images

To obtain an overall image I of the scene all cameras C₁, C₂, C₃ are synchronized, i.e. cameras C₁, C₂, C₃ provide images for a specific time interval, as shown in **figure 4****.** In order to obtain such synchronized images I₁, I₂, I₃ for a specific time frame, it is possible to define a primary camera C₁ that produces images I₁ at a predefined image rate, e.g. 24 or 60 frames per second. The primary camera C₁ furthermore sends a synchronization signal (sync) to the other cameras C₂, C₃ at the start of the respective time frame or time interval. Said synchronization signal (sync) triggers each of the other cameras C₂, C₃ to produce an image I₂, I₃ for a time interval or frame of a predefined duration starting with the synchronization signal (sync) . Of course, there are other possibilities to synchronize the image acquisition of the cameras C₁, C₂, C₃, e.g. by using an external synchronization unit which simultaneously triggers all cameras by sending a synchronization signal (sync) to each of the cameras C₁, C₂, C₃.

### BEV-Transformation

With reference to **figure 3** it is clear that merely matching image regions of images of the same resolution leads to an overall image with a homogeneous resolution distribution, i.e. a fine resolution in the center of the image where image information of the image I₃ of the camera C₃ with the highest focal length is available. While it is known to produce such an overall image by merely fitting the images I₁, I₂, I₃ by searching identical objects in the overlapping regions of the images, such techniques either lead to reduced image quality when down-sampling higher resolved images of more distant objects or using an unnecessary memory for regions of low image quality when up-sampling low resolved images of near objects.

In order to avoid such an inhomogeneous distribution of details over the image the invention proposes to apply a bird-eye-view (BEV) transformation to each of the single images taken by the cameras C₁, C₂, C₃. Such a bird-eye-view transformation takes at least a part of the camera image I₁, I₂, I₃ depicting the ground before the camera C₁, C₂, C₃, for instance a part of the camera image I₁, I₂, I₃ in which the ground is adequately resolved, and generates an undistorted image of the ground. It is known from the state of the art to transform images by using a bird-eye-view (BEV) transformation, e.g. perspective transformation to convert converging lines into parallel lines. For the purposes of the invention all different kinds of bird-eye-view (BEV) transformation may be employed. One particular example of determining a bird-eye-view transformation can be found in Venkatesh/Vijayakumar, "A simple Bird's eye view Transformation Technique", International Journal of Scientific & Engineering Research, Volume 3, Issue 5, May-2012, ISSN 2229-5518, https://www.ijser.org/researchpaper/A-Simple-Birds-Eye-View-Transformation-Technique.pdf.

On the assumption that the ground displayed in the images I₁, I₂, I₃ is sufficiently flat it is possible to determine a BEV-transformation function BEV₁, BEV₂, BEV₃ which transforms the camera image I₁, I₂, I₃ to a bird-eye-view image Î₁, Î₂, Î₃ **(****figure 4****).** Via such a BEV-transformation all objects located directly on the ground plane G **(figure 5a, 5b)** can be exactly assigned to their respective ground position, whereas objects O₁ located above the ground plane are slightly displaced depending on the camera angle. Such displacement can, however, be ignored or neglected, if the sensor images are taken in order to detect structures such as lanes or rail tracks which are directly located at the ground plane.

Once the geometry of one of the cameras C₁, C₂, C₃ is known or determined, it is also possible to determine the BEV-transformation BEV₁, BEV₂, BEV₃, i.e. the location on the ground which is depicted at a specific pixel in the camera image I₁, I₂, I₃. Such a BEV-transformation function can be determined by direct calculation of the physical properties of the sensor and lens of the camera C₁, C₂, C₃ as well as the orientation and position of the camera C₁, C₂, C₃ relative to the train 1.

Alternatively, it is also possible to determine the respective BEV-transformation functions BEV₁, BEV₂, BEV₃ for the camera images I₁, I₂, I₃ by calibration, in particular by placing the train 1 at a substantially flat track region and determining the pixel positions of single points of known positions in a calibration environment relative to the train. As each camera C₁, C₂, C₃ is mounted with a different orientation and having a different optical system with a different focal length, each camera also has its own BEV-transformation function BEV₁, BEV₂, BEV₃.

By means of the BEV-transformation, the intensity information of each pixel of the cameras C₁, C₂, C₃ is associated with a point or region at the ground plane G relative to the camera arrangement C.

In a further step, an overall image Î is composed of the available bird-eye-view images Î₁, Î₂, Î₃. In this step the composition or stitching of the bird-eye-view images Î₁, Î₂, Î₃ is performed by a stitching transformation Mi in a manner that that objects O1 or structures that are visible in overlapping fields of view are projected to the same position in the overall image Î of the scene. Such stitching or merging transformation Mi is applied to the bird-eye-view images Î₁, Î₂, Î₃ and yields one overall image Î.

The stitching transformation M is composed of separate transformations Mᵢ, i∈{1,2, 3,...N} for each of the bird-eye-view images Î₁, Î₂, Î₃ onto the common ground plane G and the overall image Î, wherein the transformation M1 is applied on the bird-eye-view image Î₁, the transformation M2 is applied on the bird-eye-view image Î₂, and the transformation M3 is applied on the bird-eye-view image Î₃. The images resulting from said transformations are composed or stitched to one overall image Î.

By means of the consecutive application of the BEV-transformation and the stitching transformation M one obtains one single overall image Î that represents an image defined on the common ground plane G. Each portion of the ground plane G which is part of the field of view of a camera pixel is assigned the respective pixel intensity and/or color value.

If the camera arrangement C is arranged on a train, the horizontal ground plane G can be defined as the common ground plane G underneath the train by means of calibration. For all BEV-transformation and the stitching transformation M the same common ground plane G is used.

As already mentioned, the invention is not restricted railroad applications: It is also possible to use the invention for obtaining an overall image of the scene around street-based vehicles, such as trucks or buses.

It is even possible to use the invention on flying vehicles such as aircraft or helicopters. When using the invention on flying vehicles, however, the relative position and/or orientation of the ground plane has to be re-calculated, as will be shown below.

With regard to **figure 5****,** the BEV-transformation is shown in more detail. If one of the cameras C1 provides an image I1, said image I1 comprises intensity information of at least one channel, e.g. grayscale, rgb, etc for each image position represented by coordinates x, y. For each pair of image coordinates (x₁, y₁), (x₂, y₂) it is possible to calculate the actual position (x'₁, y'₁). (x'₂, y'₂) on the ground plane G.

As the overall image shall be defined with regard to the ground plane with one common coordinate parametrization, i.e. common origin and common coordinate system, it is also clear that each of the cameras C₁, C₂, C₃ has its own respective BEV-transformation to map its respective image coordinates (x₁, y₁), (x₂, y₂) to an actual position on the ground plane G.

### Composition of the overall image

From **figure 6** it can be seen that a camera with a wider field of view delivers an image of optimal resolution for a region of the ground that is closer to the camera, while a camera with a narrower field of view delivers optimum resolution for regions that are more distant to the camera. By mapping all camera images to a common ground plane G by applying the respective BEV-transformations BEV₁, BEV₂, BEV₃ on the images I₁, I₂, I₃ of the single cameras C₁, C₂, C₃ it is possible to obtain an overall image Î of the scene.

Such BEV-transformations BEV₁, BEV₂, BEV₃ and generation of the overall image Î are carried out by an image processing unit PU. The camera images I₁, I₂, I₃ are provided to the respective BEV-transformation units BEV₁, BEV₂, BEV₃, which deliver at their respective outputs BEV-transformed images Î₁, Î₂, Î₃. These BEV-transformed images Î₁, Î₂, Î₃ are then provided to a mapping and merging unit M composing an overall image Î from the BEV-transformed images Î₁, Î₂, Î₃.

As the images I₁, I₂, I₃ of the single cameras C₁, C₂, C₃ partially overlap, there are different possibilities to define the overall image I in the regions where the images overlap. In particular, it is possible to choose the image information of one of the overlapping images that has a better image quality or higher resolution in the very region. Alternatively, it is also possible to combine or mix the image information of the BEV-transformed overlapping images Î₁, Î₂, Î₃ in order to obtain the respective image information of the overlapping regions, e.g. by pixelwise generation of an average.

The above described method of composing one overall image by arranging camera images by using a BEV-transformation to a common ground plane G is particularly advantageous, because the BEV-transformation allows to preserve maximum available details while the dimensions as well as memory consumption of the overall image are less than the sum of the image dimensions and memory consumption of all the individual camera images.

Therefore, the above-mentioned method does not only deliver a bird eye view of the scene surrounding the cameras C₁, C₂, C₃, one moreover obtains an overall image Î of almost homogenous information density.

In order to obtain more accurate results and avoid mismatching due to 3D-artifacts, it is desirable to place the cameras C₁, C₂, C₃ and/or their respective focal points, close to each other, particularly to avoid any stereometric effects. In such a case, the fields of view of pixel sensors of different cameras C₁, C₂, C₃ that are assigned to the same point on the ground plane via the BEV transformation are almost identical; if the cameras are sufficiently close to each other, this holds true even for objects that do not lie directly on the ground plane G.

### Resulting images

As a further advantage of the invention - when compared to overall images created without a previous BEV-transformation - one obtains overall images Î that do have less artifacts resulting from at the interfaces between the camera images I₁, I₂, I₃. While fitting camera images I₁, I₂, I₃ without prior BEV-transformation typically results in discontinuous images having discontinuities in the interface regions where camera images I₁, I₂, I₃ overlap, smooth transitions between two images are of particular advantage when objects O₁ shall be detected in the overall image Î. If such an object O₁ appears in the overlapping regions of two images I₁, I₂, I₃ , the object O₁ is unnaturally distorted by the discontinuity caused by the different transformation methods. Therefore, objects O₁ and structures that appear in overlapping regions of two images I₁, I₂, I₃ may be hard to detect for most object detection algorithms when images are composed according to the state of the art, i.e. without prior BEV-transformation.

### Object detection and advantages

If an object is present inside the overlapping region of two cameras C₁, C₂, C₃, the invention allows computationally efficient detection of the position P' of the object O1 inside the overall image Î without using further adaptations, such as non-maximum suppression techniques (NMS). The method according to the invention compared to separate object detection in the two cameras followed by NMS.

Once the BEV-transformations and stitching transformation M transforming the camera images I₁, I₂, I₃ to the overall image Î are known, it is also possible to determine the inverse transformation of the BEV-transformations and the stitching transformation M, which determines the position P within a camera image I₁, I₂, I₃ of an object O1 that was detected by object detection in the overall image Î.

If the object detection as mentioned above serves the purpose to detect rail tracks in front of a train 1, said object detection is carried out with respect to the overall image Î. Once the position P'₁, P'₂, P'₃ of a structure, e.g. of a rail, is detected in the overall image Î, the object detection algorithm returns said position information P'₁, P'₂, P'₃ with respect to said overall image Î. Such position information may comprise a plurality of points located at the overall image Î or the ground plane G, along the rail track.

The application of the inverse transformations, as shown in **figure 7a****,** for the image I₁, returns the positions P_{1,1}, P_{2,1}, P_{3,1} within the camera image I₁ when applied to the respective position P'₁, P'₂, P'₃ within the overall image.

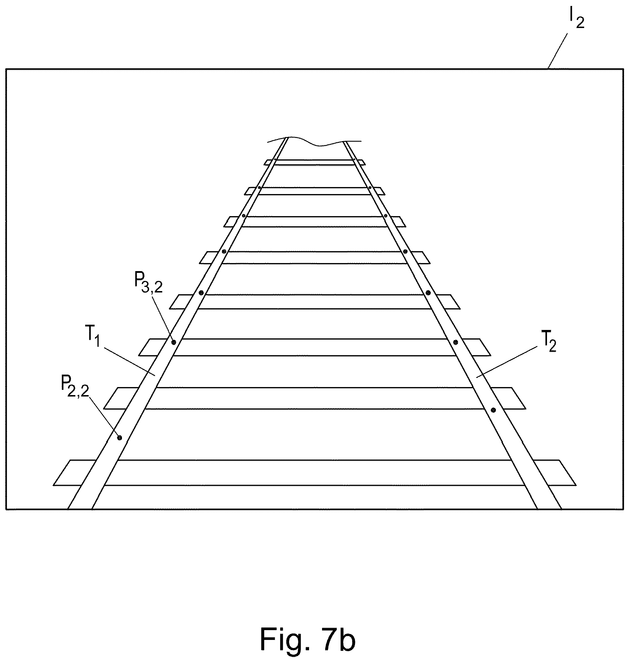

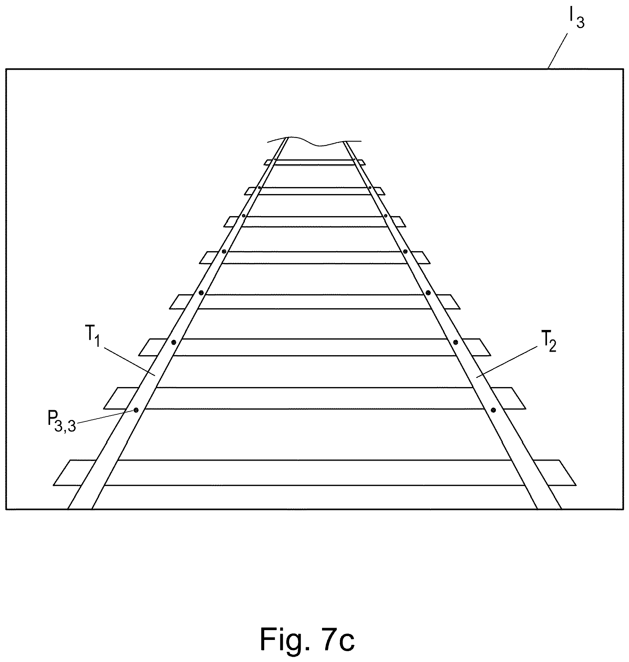

The inverse transformations may lead to multiple results if the object visible at the position P'₂, P'₃, in the overall image Î is depicted in overlapping regions of the camera image I₁. It is therefore possible to find the objects detected at the position P'₂, P'₃, in the overall image Î in the image I₂, shown in **figure 7b****,** as points P_{2,2}, P_{3,2}. The object detected at position P'₃ can also be located in I₃ at point P_{3,3} **(****figure 7c****)** .

If the algorithm for detecting rails results in a curve T₁, T₂ defined by a multitude of positions P' with respect to the overall image Î, said curve T₁' , T₂' of positions P' can be transformed to one or more curves T₁, T₂ with respect to the camera image I₁ by applying the inverse transformations. The method of back-transformations as shown with respect to the camera image I₁ can, of course, also be applied to the other camera images I₂, I₃.

### Multiple use of the same BEV-transformation; Real time use

Once the camera setup is finished and the BEV-transformations and the stitching transformations are determined for the cameras C₁, C₂, C₃ the image transformation, i.e. the transformation of the single camera images I₁, I₂, I₃ to an overall image Î can be repeated multiple times. Particularly in cases where the ground around the vehicle is sufficiently flat, BEV-transformations do not vary over time and can be pre-computed. Therefore, it is possible to use the same transformation for the generation of multiple overall images Î. The image processing PU unit can be used in order to trigger the image acquisition and the repeated generation of further overall images Î.

This method can be used in a real time display of the position of an object directly in the camera images I₁, I₂, I₃. For instance, detected objects can be highlighted directly on a screen located near the driver or pilot. The image signal of one of the cameras I₁, I₂, I₃ is fed to the screen. Furthermore, the display also shows additional real time position information P resulting from the object detection. By applying the inverse of the BEV-transformation and stitching transformation to the curves T resulting from the object detection in the overall image Î into the single camera images I₁, I₂, I₃ and displaying said inversely transformed curves T₁, T₂ on the display or screen in real time, the train operator has an overview of the rail tracks and the train's future path.

### Curved and varying ground surfaces

In some cases, the assumption that the ground is sufficiently flat, cannot be upheld. This is particularly true for situations where the vehicle on which the cameras C₁, C₂, C₃ are mounted, drives on curved ground. In many of those cases the assumption of a flat virtual ground plane G as described above only results in a small error. In particular, object detection algorithms typically rely on a smooth mapping of the camera images without discontinuities rather than on a correct geometrical representation of the ground. In these cases, it is therefore not relevant that the ground is totally flat. Therefore, the approximation of a flat virtual ground plane is sufficient for most object detection algorithms. If required, it is however possible to use specific pre-calculated BEV-transformations for each single position on a street or rail track in order to obtain an advanced overall image Î. In such a case, a flat ground plane G can be replaced by a curved ground surface.

It is also possible to calculate the actual position of the ground plane or surface G in real time, for instance when the invention is used in an aircraft to detect runways or other flight traffic related structures on the ground underneath the aircraft. Through knowing the distance to the ground as well as the orientation of the plane, it is possible to calculate a BEV-transformation for each set of camera images I₁, I₂, I₃ individually in order to determine the overall image Î. For this reason, the actual position of the cameras C₁, C₂, C₃ and/or the vehicle 1 on which the cameras are mounted are measured. This measurement yields the relative position and orientation of the cameras relative to the real ground. The measurement and the acquisition of the images I₁, I₂, I₃ are synchronized, i.e. the position and orientation of the cameras C₁, C₂, C₃ relative to the ground is measured approximately at the same time of the acquisition of the images.

## Claims

1. Method for generating an overall digital image (I) and/or representation of a scene
a) using a plurality of cameras (C₁, C₂, C₃)
- which are located at known and/or predefined relative positions and have known and/or predefined relative orientation, in particular the cameras (C₁, C₂, C₃) being oriented towards the same direction (D),
- wherein the cameras (C1, C2, C3) have a predetermined, in particular different, or adjusted focal length and are sensitive for different distance ranges,
- wherein the field of view (FOV₁, FOV₂, FOV₃) of each camera (C₁, C₂, C₃) overlaps with the field of view (FOV₁, FOV₂, FOV₃) of at least one of the other cameras (C₁, C₂, C₃),
b) wherein for each of the cameras (C₁, C₂, C₃) a separate bird-eye-view-transformation (BEV₁, BEV₂, BEV₃) is determined, which transforms a camera image (I₁, I₂, I₃) to a bird-eye-view-image (Î₁, Î₂, Î₃) with respect to a predefined ground surface or plane (G), said ground surface or plane (G) being common to all cameras (C₁, C₂, C₃) and their respective bird-eye-transformations (BEV1, BEV2, BEV3), and
wherein a stitching transformation (M; M1, M2, M3), is determined, said stitching transformation (M; M1, M2, M3) mapping regions of the bird-eye-view-images (Î₁, Î₂, Î₃) to the overall image (Î) in a manner, so that objects (O₁) or structures that are visible in overlapping fields of view are projected to the same position in the overall image (Î) of the scene,
and
c) in particular simultaneously, generating images (I₁, I₂, I₃) with the cameras (C₁, C₂, C₃), transforming said images (I₁, I₂, I₃) using the bird-eye-view-transformation (BEV₁, BEV₂, BEV₃) associated to the respective camera (C₁, C₂, C₃)
and composing the overall digital image (Î) from said transformed images (Î₁, Î₂, Î₃) by application of the stitching transformation (Mi) .

2. Method according to claim 1, wherein in step b) bird-eye-view-transformations (BEV₁, BEV₂, BEV₃) and the stitching transformation (Mi) are determined with respect to a predetermined camera configuration, and step c) is repeated multiple times, the cameras in particular having the same known and/or predefined relative position and orientation to one another and the ground plane, using the same bird-eye-view transformations (BEV₁, BEV₂, BEV₃) as defined in step b) and/or the same stitching transformation (Mi).

3. Method according to claim 1 or 2, further comprising:
detecting one or more objects (O₁) within the overall image (Î) and localizing said objects (O₁) at one or more image positions (P') with respect to the overall image (Î).

4. Method according to claim 3, wherein the position (P) with respect to a camera image is determined from the image position (P') with respect to the overall image (Î) by applying the inverse (Mi') of the stitching transformation and the inverse (BEV₁', BEV₂', BEV₃') of the respective bird-eye-view-transformation (BEV₁, BEV₂, BEV₃) to said position (P').

5. Method according to any of claims 1 to 4, wherein the cameras (C₁, C₂, C₃) are mounted on a vehicle (1), in particular on a train or truck, and the virtual ground surface or plane (G) is defined by a plane located on the ground underneath said vehicle (1).

6. Method according to any of claims 1 to 5, wherein the bird-eye-transformation (BEV₁, BEV₂, BEV₃) is calculated individually, and in particular in real time, depending on the actual position of the cameras (C₁, C₂, C₃) or the vehicle (1) on which the cameras are mounted relative to the real ground, said actual position being measured, wherein the measurement is synchronized with the acquisition of the camera images (I₁, I₂, I₃).

7. Arrangement for generating an overall digital image (Î) and/or representation of a scene comprising
a) a plurality of cameras (C₁, C₂, C₃)
- which are located at known and/or predefined relative positions and have known and/or predefined relative orientation, in particular the cameras (C₁, C₂, C₃) being oriented towards the same direction (D),
- wherein the cameras (C₁, C₂, C₃) have a predetermined or adjusted focal length and are sensitive for different distance ranges,
- wherein the field of view (FOV₁, FOV₂, FOV₃) of each camera (C₁, C₂, C₃) overlaps with the field of view (FOV₁, FOV₂, FOV₃) of at least one of the other cameras (C₁, C₂, C₃),
b) an image processing unit (PU) for generating an overall image (Î) having an adapter to receive images (I₁, I₂, I₃) generated by the cameras (C₁, C₂, C₃), and
- being adapted and/or configured to - separately for each camera (C₁, C₂, C₃) - carry out a bird-eye-view-transformation (BEV₁, BEV₂, BEV₃) to the respective image (I₁, I₂, I₃) of the respective cameras (C₁, C₂, C₃), said bird-eye-view-transformation (BEV₁, BEV₂, BEV₃) transforming a camera image (I₁, I₂, I₃) to a bird-eye-view-image (Î₁, Î₂, Î₃) with respect to a predefined ground surface or plane (G), said ground surface or plane (G) being common to all cameras (C₁, C₂, C₃) and their respective bird-eye-transformations (BEV1, BEV2, BEV3), and
- being adapted and/or configured to apply a stitching transformation (Mi), said stitching transformation (Mi) mapping regions of an the bird-eye-view-images (Î₁, Î₂, Î₃) to the overall image (Î) in a manner, so that objects or structures (O₁) that are visible in overlapping fields of view are projected to the same position in the overall image (Î) of the scene,
and
c) the image processing unit (PU) being adapted and/or configured to carry out the following steps,
- in particular simultaneously, triggering the cameras (C₁, C₂, C₃) to generate images (I₁, I₂, I₃),
- transforming said images (I₁, I₂, I₃) using the bird-eye-view-transformation (BEV₁, BEV₂, BEV₃) associated to the respective camera (C₁, C₂, C₃), and merging said transformed bird-eye-view images (Î₁, Î₂, Î₃) to the overall digital image (Î) by application of the stitching transformation (Mi).

8. Arrangement according to claim 7, wherein the image processing unit (PU) being adapted and/or configured to repeatedly generating overall digital images (Î) using the same bird-eye-view transformations (BEV₁, BEV₂, BEV₃) and/or the same stitching transformation (Mi).

9. Arrangement according to claim 7 or 8, further comprising an object detection unit for detecting one or more objects (O₁) within the overall image ( Î ) and localizing said objects (O₁) at one or more image positions (P') with respect to the overall image ( Î ).

10. Arrangement according to claim 9, wherein the object detection unit is configured to determine the position (P) with respect to a camera image from the image position (P') with respect to the overall image (Î) by applying the inverse (Mi') of the stitching transformation and the inverse (BEV₁', BEV₂', BEV₃') of the respective bird-eye-view-transformation (BEV₁, BEV₂, BEV₃) to said position (P').

11. Arrangement according to any of claims 7 to 10, wherein the cameras (C₁, C₂, C₃) are mounted on a vehicle (1), in particular on a train, and the virtual ground surface or plane (G) is defined by a plane located on the ground underneath said vehicle (1).

12. Arrangement according to any of claims 7 to 11,
wherein the arrangement comprises means to determine the actual position of the cameras (C₁, C₂, C₃) or the vehicle (1) on which the cameras are mounted relative to the real ground, said measurement being synchronized with the acquisition of the camera images (I₁, I₂, I₃), and
wherein the image processing unit (PU) is configured to calculate the bird-eye-transformation (BEV₁, BEV₂, BEV₃) individually, and in particular in real time, depending on the actual position of the cameras (C₁, C₂, C₃) or the vehicle (1) on which the cameras are mounted relative to the real ground.
